# EUROPEAN PATENT APPLICATION

(11) **EP 4 554 243 A1**
(43) Date of publication of application: **14.05.2025**
(21) Application number: 23208649.6
(22) Date of filing: 08.11.2023
(51) Int. Cl.: H04N 23/45, H04N 23/74, G06T 7/194, H04N 23/56

(54) **METHOD OF OPERATING A CAMERA ARRANGEMENT**

(71) Applicant: Lumileds LLC, San Jose, CA 95131 (US)
(72) Inventor: van der Sijde, Arjen Gerben, San Jose, 95131 (US); Pfeffer, Nicola Bettina, San Jose, 95131 (US); van Voorst Vader, Quint, San Jose, 95131 (US)
(74) Representative: Beckord & Niedlich Patentanwälte PartG mbB

(57) **Abstract**

The invention describes a method of operating a camera arrangement (1) of a mobile device (2), comprising the steps of operating a first camera (C1) of the camera arrangement (1) using a short exposure duration (Dₛₕₒᵣₜ) and simultaneously actuating a flash unit (12) of the camera arrangement (1) to obtain a first image (11); operating a second camera (C2) of the camera arrangement (1) using a long exposure duration (D_{long}) to obtain a second image (12); processing the first image (11) to extract foreground image data (5); processing the second image (12) to obtain background image data (4); and overlaying the foreground image data (4) onto the background image data (5) to obtain a final image (6). The invention further describes a camera control arrangement (1) configured to perform the steps of the inventive method, and a camera arrangement (1) comprising such a camera control arrangement (1).

## Description

### BACKGROUND OF THE INVENTION

A handheld mobile device such as a smartphone ("camera phone") or tablet computer can be equipped with two or more digital cameras and a flash. Each camera generally comprises a digital image sensor arranged behind a focussing arrangement or lens, which determines the camera's field of view. For example, a camera with a large field of view can be used to capture images of "far-away" scenes such as landscapes, and a camera with a narrower field of view can be used to capture images of "close-up" scenes, e.g. portraits. A segmented flash - comprising several individually addressable emitters and appropriate optics - can be used to control the amount of light that is cast onto different regions of the scene to be photographed by switching individual segments on or off, by driving the individual segments with different current densities, etc. In this way, the target area or scene can be selectively illuminated according to the current density distribution over the flash segments.

Scenes with moving objects generally do not present a problem during daytime or in a brightly-lit environment, since the short exposure time ensures that a moving object will not appear blurred in the final image. However, scenes with moving objects are difficult to image correctly in dimly-lighted conditions, for example an outdoor scene at night. A dimly-lighted or low-light scene shall be understood as a scene in which the ambient light level is not sufficient to illuminate the foreground and background. One way of improving the quality of camera phone night-time images is to use a stable support such as a tripod to ensure that the camera itself is completely steady, allowing the camera to use a longer exposure time. For a user wishing to capture a spontaneous snapshot, however, this option is not realistic. Without a stable support, a hand-held camera phone will shake to some extent due to unavoidable "hand tremble", and images taken in low light conditions and long exposure times can therefore show significant image blur. To correct for hand tremble when using a long exposure in low light conditions, a camera phone can deploy optical image stabilization to minimize image blur. This can deliver satisfactory results for stationary scenes. However, the long exposure time required for low-light conditions means that moving objects - for example people that are relatively close to the camera - will generally appear blurred in the final image.

Alternatively, to reduce motion blur of objects in a low-light scene, a camera phone can implement a so-called "slow sync" or "slow sync flash" technique in which an image is captured with a long exposure time, during which the flash is briefly actuated. However, it can be difficult to synchronize a flash with the blanking time of a camera. In the case of a device with more than one camera, particularly when rolling shutter is implemented, the blanking times of the image sensors may also not be synchronized with respect to each other, making it even more difficult to synchronize the flash to the blanking times of the cameras.

Therefore, it is an object of the invention to provide an improved way of capturing images in low-light conditions using a camera arrangement of a handheld mobile device.

### SUMMARY OF THE INVENTION

The object of the invention is achieved by the claimed method of operating a camera arrangement of a mobile device to obtain an image of a low-light scene, by the claimed camera control arrangement, and by the claimed camera arrangement.

The mobile device can be any handheld device such as a camera phone ("smartphone"), or tablet computer ("tablet") etc., and may be assumed to comprise software such as a camera application or "camera app" to allow interaction between a user and the camera module. The first and second camera modules shall be understood to be arranged at the rear of the mobile device, and the user-facing side of the mobile device may be assumed to include a touch screen on which the camera app can display captured images. The camera arrangement of the mobile device is referred to as a "dual camera" if it comprises two cameras, a "triple camera" if it comprises three cameras, etc. In the following, without restricting the invention in any way, the mobile device is assumed to be a camera phone with at least a dual camera.

According to the invention, the method of operating the camera arrangement to obtain an image of a low-light scene comprises the steps of operating a first camera of the camera arrangement using a short exposure duration and simultaneously actuating a flash unit of the camera arrangement to obtain a first image; operating a second camera of the camera arrangement using a long exposure duration to obtain a second image; extracting near-field image data from the first image; and overlaying the near-field image data onto the far-field image data to obtain a final image or "composite image".

The flash will only illuminate objects in the near field, i.e. any objects close to the user, and the first image primarily serves to provide the foreground of the composed image. The first image is therefore referred to in the following as the "foreground image". The second image includes the entire scene but will primarily serve to provide the background of the composite image, and is therefore referred to in the following as the "background image". While the second camera is being used to capture the background image, the flash remains off. The terms "first image" and "second image" do not imply a chronological order: the background image may equally well be captured after the foreground image, as will be explained below.

An advantage of the inventive method is that it enables a low light scene to be imaged in a more precise way, with optimally illuminated and correctly focussed foreground objects (even if these are not completely stationary), and an optimally illuminated background. The foreground - for example a number of moving and/or gesticulating people - is optimally illuminated by using the flash to briefly illuminate the near-field, and using the first camera to capture the short-exposure foreground image. The background - for example a night-time landscape or cityscape - is optimally illuminated by capturing a separate background image using a long exposure time to collect sufficient ambient light. The background image information and foreground image information are then combined to give a correctly exposed final image of a low-light scene comprising near-field and far-field regions.

According to the invention, the camera control arrangement is configured to perform the steps of the inventive method and comprises at least a means of actuating the first camera of the camera arrangement using a short exposure time while also actuating the flash unit of the camera arrangement to obtain a foreground image; a means of actuating the second camera of the camera arrangement using a long exposure duration to obtain a background image; and image processing modules configured to extract near-field image data from the foreground image, to identify and remove motion blur from the background image to obtain the desired far-field image data, and to overlay the near-field image data onto the far-field image data to obtain a final image. The camera control arrangement can be realized using any suitable combination of hardware and software components.

According to the invention, the camera arrangement of a handheld mobile device comprises at least a first camera and a second camera, each comprising a digital image sensor and focussing optics, whereby the field of view (FOV) of the first camera is narrower than the field of view of the second camera. The camera arrangement further comprises a segmented flash, and an instance of the inventive camera control arrangement for controlling the cameras and the flash, and for obtaining a final image for outputting to a display module of the handheld device.

It shall be understood that the inventive camera arrangement for a mobile device is not limited to only two camera modules, and the mobile device can comprise further camera modules, for example in a triple camera arrangement, a quadruple camera arrangement etc., as will be known to the skilled person. Equally, the mobile device may comprise a user-facing camera on the same side as the display or screen.

The dependent claims and the following description disclose particularly advantageous embodiments and features of the invention. Features of the embodiments may be combined as appropriate. Features described in the context of one claim category can apply equally to another claim category.

In the following, the inventive method describes a way of controlling the cameras and flash of a camera phone in order to obtain an optimally illuminated image of a low-light scene comprising near-field and far-field elements. Of course, the camera control arrangement shall be understood to be capable of controlling the camera arrangement according to other lighting conditions, for example to capture an image of a scene illuminated by daylight, an image of a brightly lighted indoor scene, etc.

As indicated above, the camera phone can have two or more cameras. For example, the camera arrangement can comprise a camera with a "normal" or zoom lens and another camera with a wide-angle lens. For a camera with a long focus, zoom or telephoto lens, the field of view can for example be in the order of 10° - 60°. Such a camera can be deployed for general photography in which the region of interest is neither particularly close to the user nor particularly remote from the user. For a camera with a "wide-angle lens", the field of view can be in the order of 80°, and such a camera is generally deployed for landscape photography or for a scene in which the region of interest is remote from the user. In the context of the invention, the "first camera" shall be understood to have a zoom lens, and the "second camera" shall be understood to have a wide-angle lens. Of course, the mobile device can comprise further cameras, for example triple and quadruple camera arrangements can include various combinations of telephoto camera, monochrome camera, an ultrawide-angle camera, etc.

The cameras used to capture the foreground and background images can have the same resolution, so that the resulting images have the same number of pixels. However, in a preferred embodiment of the invention, the smaller FOV camera has a higher resolution than the larger FOV camera. Effectively, as used in the inventive method, the smaller FOV camera will then "oversample" compared to the wider FOV camera, so that the foreground image delivers more image information per pixel of the final image. For the composed final image, the pixel resolution of the foreground image can be collapsed to the pixel resolution of the background image by pixel binning. Such a realisation can have various advantages, for example increasing sensitivity on account of the higher light-gathering capability of the foreground camera's image sensor, allowing a favourably short exposure time for the foreground image, and obtaining a favourably sharp "motion-freeze" of any moving foreground object in the low-light scene.

Because of the long exposure time, the background image may include motion blur from near-field objects that are not completely stationary, for example a person in the foreground that is moving and/or gesticulating will appear blurred in the background image, while far-field objects such as buildings or landscape features are unaffected. Therefore, in a particularly preferred embodiment of the invention, the method comprises a step of removing motion blur from near-field objects in the background image. Any suitable image-processing tool can be deployed to detect and remove motion blur. For example, an image-processing tool can "excise" motion blur pixels and repair the image using pixels copied or extrapolated from regions next to the motion blur region.

The flash will cast light onto near-field objects only, i.e. any object in the near-field will be illuminated and clearly distinguishable from the comparatively dark background in the foreground image. This is because the far-field is generally too remote to be illuminated to any extent by the short burst of light from the flash, and background regions in the foreground image will show less image information compared to the background image. Therefore, in a particularly preferred embodiment of the invention, the step of extracting near-field image data from the foreground image comprises a step of segmenting any flash-illuminated near-field object from background image regions, i.e. near-field image data is separated from far-field image data. Any suitable image-processing tool can be deployed to detect near-field objects in the foreground image. For example, an image-processing tool can "segment" the foreground image to separate one or more flash-illuminated objects from the dark background. Alternatively or in addition, image information from a depth-sensing camera can be used; equally, since any two cameras of a multi-camera device are spatially separate, a depth map can be created from any two images using the principle of stereo vision.

In a preferred embodiment of the invention, the light level in the scene is determined in an initial step. This can be done by deploying a suitable image-processing technique, for example by segmenting the foreground from the background and then calculating the average light level in the background image pixels. The long exposure duration (or "long exposure time") for the second camera can then be determined on the basis of the measured or estimated light level. Generally, the darker the scene, the longer will be the exposure time for the image sensor of the second camera in order to obtain sufficient information for the background image. Depending on the average light level in the background of the scene, the background image can be captured in one take using the required long exposure duration, or in several takes with exposure times that add up to the desired long exposure time. A long exposure duration that is relatively short (for example any fraction of a second such as 0.2 s) can allow the background image to be captured in a single take, while a long exposure duration in the order of several seconds can require the background image to be captured in several takes, effectively capturing a short video of the scene and combining the frames to give a single background image.

In a preferred embodiment of the invention, the camera arrangement comprises a segmented flash, i.e. an array of individually addressable emitters, and a focussing arrangement to direct the light from each emitter into a corresponding region of the scene. For example, the flash can comprise a 3 x 3 array of high-intensity LED emitters. The emitters can all be the same size, i.e. with the same surface area, so that the corresponding regions of a scene receive the same quantities of light. Alternatively, a centrally arranged emitter is larger than a corner emitter, for example the central column of a 3 x 3 array can be wider than the left-hand and right-hand columns; equally, the central row can be deeper than the upper and lower rows. Such a configuration can be preferable in a multi-camera device, since the allocation of emitter size can be tailored to the ratio of the camera's fields of view. In the inventive method, a suitable selection of centrally placed emitter(s) are selectively activated to optimally illuminate the near field of the low-light scene.

Preferably, the inventive camera control arrangement comprises a means of computing a depth map of the scene. This can be used to determine the shape and position of any object in the near field of the scene, and to identify the selection of emitters that will optimally cast light onto the near field object(s). The depth map can also be used to determine the distance of any such near field object to the image sensor. Preferably, the inventive camera control arrangement computes the short exposure time on the basis of the depth map.

The foreground image will generally include people or objects which should be optimally rendered in the final image. The inventive method as described above provides a favourably straightforward technique in which a sharply focussed near field object is excised from a flash-illuminated near-field image and overlaid or "stitched" onto a background image.

The quality of the final image can be further improved by deploying the wide-angle background camera with a short exposure time to capture another flash-illuminated image. An exemplary sequence of operation can be as follows: using the foreground camera (with its smaller FOV), a foreground image is captured using a short exposure time, and a background image is then captured using the wide-angle background camera with a long exposure time as explained above. Subsequently, the background camera is actuated again, this time using a short exposure time while simultaneously driving a suitable selection of flash emitters in order to obtain a third image. The third image can provide a satisfactory representation of any objects in the foreground that are outside the smaller field of view of the foreground camera.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

Figure 1 shows an exemplary low light scene to be photographed;
Figure 2 shows a rear view of an exemplary camera phone;
Figure 3 is a schematic block diagram of an embodiment of the inventive camera control arrangement;
Figure 4 is a flowchart to illustrate an exemplary embodiment of the inventive method;
Figures 5 and 6 show exemplary timing sequences deployed by the inventive method;
Figure 7 shows an exemplary image of the scene of Figure 1, captured using a prior art technique.

In the drawings, like numbers refer to like objects throughout. Objects in the diagrams are not necessarily drawn to scale.

### DETAILED DESCRIPTION OF THE EMBODIMENTS

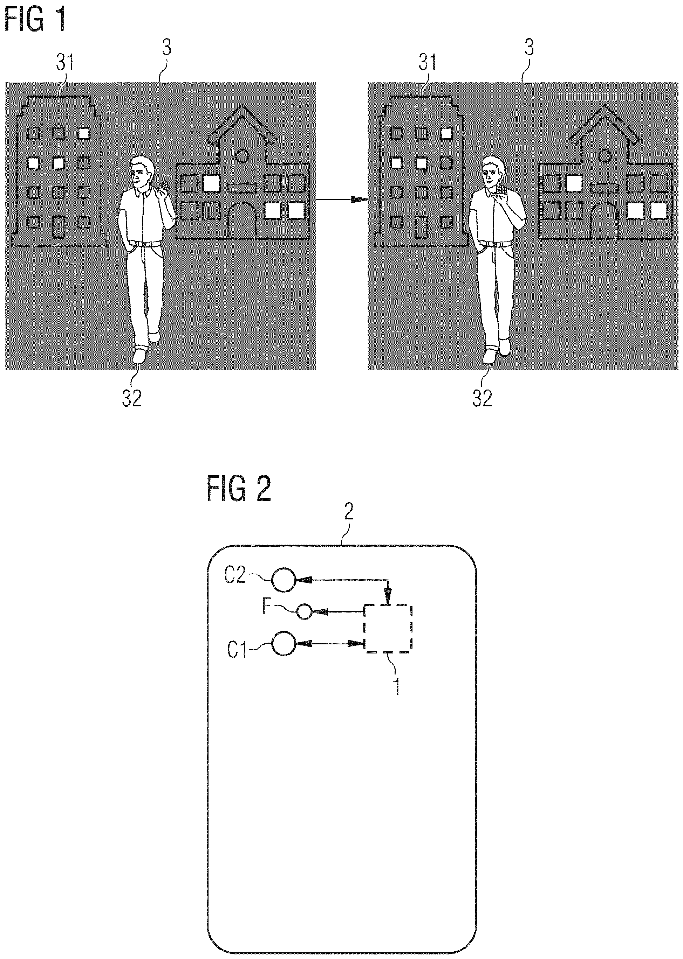

Figure 1 illustrates progression of an exemplary night-time scene 3 over a short time frame, for example a fraction of a second. A person 32 relatively close to the viewer (who may be assumed to be viewing the scene on the screen of a camera phone) is moving in front of a cityscape backdrop. The diagram shows various buildings 31 in the background of this exemplary low-light scene. The viewer wishes to capture an image which shows the region of interest in sharp focus, in this case the moving foreground person 32, and which conveys the night-time atmosphere by correctly exposing the buildings 31 and dark sky in the background. Of course, instead of a person in the foreground, the "region of interest" may be any essentially non-stationary foreground object.

Figure 2 shows a rear view of a "dual camera" camera phone 2, with an exemplary configuration of a zoom camera C1, a wide-angle camera C2, and a segmented flash unit 12. The camera phone also comprises an instance of the inventive camera control arrangement 1 (indicated by the dotted lines) 1 for carrying out the inventive method. Each camera C1, C2 comprises a digital image sensor arranged behind a lens. The camera control module 1 comprises hardware and software elements to control the image sensors and the flash unit, to process the image sensor output signals, and to generate a final image to display on the screen of the camera phone 2.

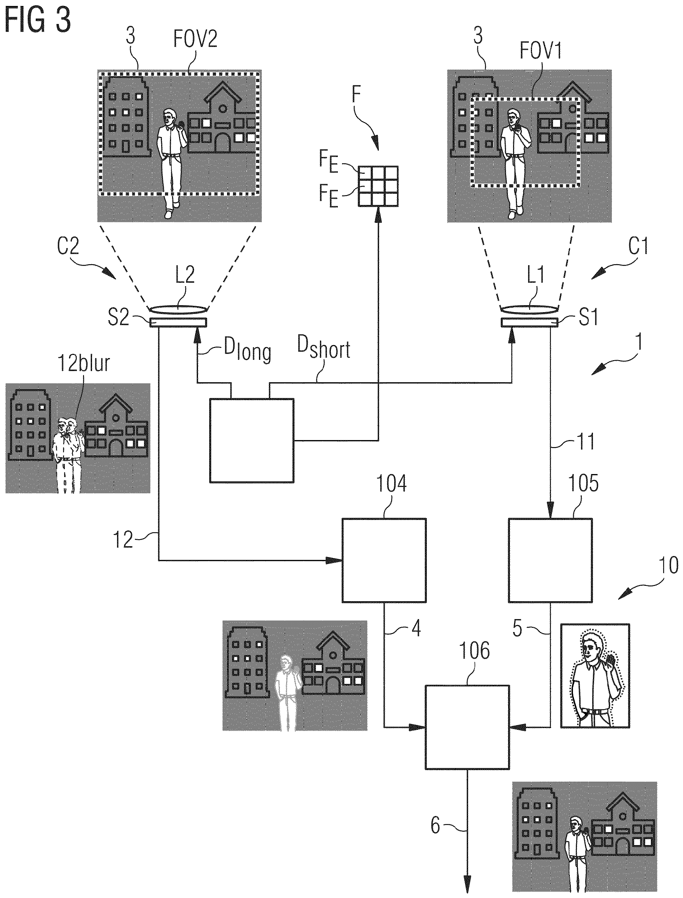

Figure 3 is a schematic block diagram of an embodiment of the inventive camera control arrangement 1. The diagram shows two cameras C1, C2 of a camera phone, and indicates the field of view FOV1, FOV2 of each camera. Each camera C1, C2 has an image sensor S1, S2 and a lens L1, L2 that determines the field of view FOV1, FOV2 in each case. Here, the second camera C2 has a relatively large field of view FOV2, and the first camera C1 has a smaller field of view FOV1. The entire scene 3 of Figure 1 is shown in the field of view FOV2 of the second camera C2.

The second camera C2 is used by the inventive method as the "background camera", and the first camera C1 is used as the "foreground camera". This allocation can be made on the basis of preliminary image-processing steps (e.g. during the "preview mode"), for example by identifying the background and foreground regions of the scene. The low light level of the night-time scene 3 of Figure 1 can be determined by calculating the average signal level of the red, green and blue channels in the background region of image data collected by the wide-angle image sensor, and the camera control arrangement 1 can determine exposure times D_{long}, Dₛₕₒᵣₜ for the image sensors S1, S2 on the basis of the detected light level. The diagram also shows an exemplary segmented flash 12 of the camera phone. In this case the flash 12 comprises nine individually addressable emitters 121. The camera control arrangement 1 can comprise a flash driver configured to actuate any combination of the individually addressable emitters 121 in order to cast specific amounts of light onto different regions of the scene. This can be done by switching individual segments 121 on or off, by driving the individual segments 121 with different current densities, etc. This allows the scene 3 to be selectively illuminated according to the current density distribution over the flash segments 121. A lens or focussing optics is provided to project the light from a flash segment 121 into a corresponding region of the scene 3.

When the user taps a button (e.g. an on-screen button or side button of the camera phone) to capture an image of a low-light scene 3 as described in Figure 1, the camera control arrangement 1 actuates a suitable selection of emitters 121 of the segmented flash 12 for a brief duration Dₛₕₒᵣₜ, and simultaneously activates the foreground image sensor S1 to capture a foreground image 11. With its smaller field of view FOV1, the first camera C1 is used to image only a portion of the scene 3, in this case the moving person 32 or "region of interest" in the foreground. The camera control arrangement 1 subsequently activates the background image sensor S2 with a long exposure time D_{long} to obtain a background image 12, during which the flash 12 remains off.

Alternatively, the background image 12 is captured first. During the long exposure duration D_{long}, the image information (from the image sensor S2 of the second camera C2) can be analysed so that a suitable illumination distribution can be selected. When the background image 12 has been captured, the selected illumination distribution is applied to the flash and the short-exposure foreground image 11 is captured using the first camera C1.

In a further alternative, using a "rolling shutter" strategy, the short-exposure foreground image is captured by interrupting the long exposure for the background image. In this approach, the background image is generated from multiple frames captured in series (using the background camera C2), and the short-exposure foreground image is captured (using the foreground camera C1) by interrupting the series for a brief interval - for example an interval of one or two frames - and actuating the flash in this interval. The flash-illuminated frames are used only for the foreground image. These flash-illuminated frames are excluded from the series of frames used to generate the background image.

The camera control arrangement 1 reads and processes the image sensor output data 12, 11, and the various stages of image processing are indicated as thumbnails 12, 4, 5, 6 in the diagram. The background image 12 will show correctly exposed and focussed far-field regions, but will include blurry near-field regions. The foreground image will show an underexposed far field, but sharply focussed and correctly illuminated near-field objects. The background is prepared by removing near-field motion blur 12_{blur} from the background image 12 in a de-blur module 104. The relevant foreground image information is segmented from the foreground image 11 in an image segmentation block 105. Any segmented near-field object 5 (in this case the person in the foreground) is overlaid onto the de-blurred background 4 using a suitable image-stitching algorithm 106. The resulting composite image 6 of the night-time scene 3 can then be shown on the screen of the camera phone 2 and/or stored in a memory of the camera phone 2.

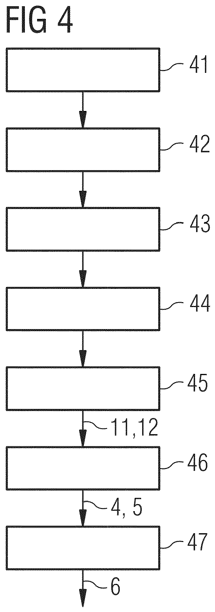

Figure 4 is a flowchart to illustrate an exemplary embodiment of the inventive method, using a camera phone 2 equipped with an imaging assembly as described in Figure 3. The method is initiated when the user of a camera phone 2 actuates the camera app (activating its "preview mode") and aims it at a scene 3 to be photographed, and the camera control arrangement 1 determines that the scene is a low-light scene or night-time scene. As explained above, a low-light scene is a scene in which the ambient light level is not sufficient to satisfactorily illuminate the foreground and background.

In step 41, the camera control arrangement 1 analyses the scene to determine the level of light in the scene (for example by deploying a suitable auto exposure algorithm while the camera app is in preview mode, during which the image sensors and processing pipeline are active). The light level in the background is used to determine the exposure time required for a satisfactory background image.

In step 42, the camera control arrangement 1 determines which camera shall be used to capture the background, and which camera of a dual/triple/quadruple camera arrangement shall be used to capture the foreground. For example, a zoom camera can be assigned to capture the foreground image, and a wide-angle camera can be assigned to capture the background image.

In step 43, a depth map may be analysed, for example to determine the distance to the foreground object(s), to distinguish dark foreground regions from the dark background, etc. Information obtained from a depth map can be used to select a flash duration and/or to identify an appropriate selection of emitters. Otherwise, a default flash duration and default selection of emitters are chosen for generating a foreground image. For example, the emitters to be activated may be chosen according to the FOV of the corresponding camera.

In step 44, control parameters of the segmented flash are determined by the camera control arrangement 1, for example a strobe light illuminance distribution is determined to optimally illuminate near-field objects when capturing the foreground image.

In step 45, the image sensors S1, S2 and flash 12 are activated according to the determined parameters to obtain a short-exposure "foreground image" 11 and a long exposure "background image" 12.

In step 46, the camera control arrangement 1 processes the image data 11, 12 to segment an object of interest from the foreground image 11, and to remove blur from the background image 12. The de-blurred background image 4 and any segmented near-field image regions 5 are stitched to obtain the final or composite image 6, which is output in step 47 for displaying on the camera phone's screen.

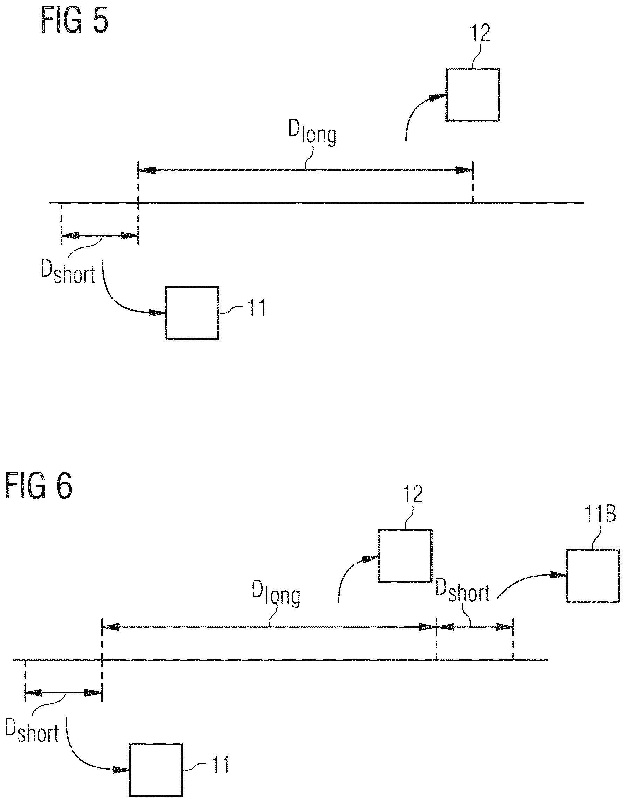

Figure 5 shows an exemplary timing sequence applied by the inventive method. Here, the diagram shows a short exposure time Dₛₕₒᵣₜ, which applies to the camera selected to capture the foreground image 11, and a long exposure time D_{long}, which applies to the camera selected to capture the background image 12.

Figure 6 shows a further exemplary timing sequence applied by the inventive method, with exposure times D_{long}, Dₛₕₒᵣₜ for the foreground camera C1 and background camera C2 to capture the foreground and background images 11, 12 as explained above. After capturing the long-exposure background image 12, a second near-field image 11B is then captured using the wide-angle background camera C2 and a second flash burst with a suitable duration Dₛₕₒᵣₜ as indicated, for example a similar exposure time used to capture the initial foreground image 11 using the zoom camera C1. The second near-field image 11B is then processed to glean additional near-field information to be used in the foreground of the composite or final image, for example image data that can be used to optimally render any near-field objects lying outside the field of view FOV1 of the foreground camera C1.

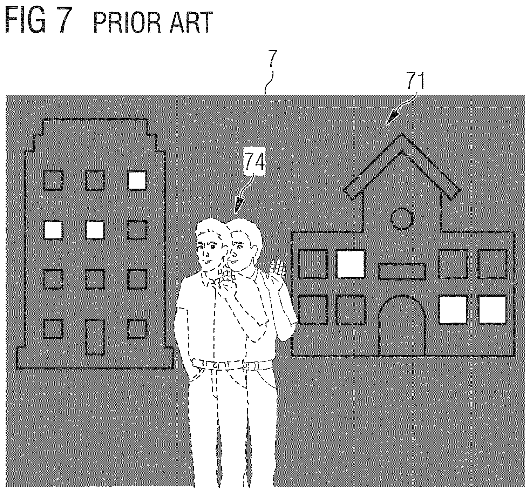

Figure 7 shows an exemplary image 7 of the scene of Figure 1, captured by a camera phone using a prior art technique in which the exposure time is increased in response to the low light levels. The prior art approach may deploy optical image stabilization to correct image blur from hand tremble during the long exposure time, so that stationary elements such as the background 71 can be sharply rendered. However, optical image stabilization has a limited ability to correct for motion of moving objects. As a result, the foreground person is out of focus in the final image, and may exhibit a significant amount of motion blur 74.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

### Reference signs

| | |
|---|---|
| camera control arrangement | 1 |
| camera | C1, C2 |
| image sensor | S1, S2 |
| lens | L1, L2 |
| field of view | FOV1, FOV2 |
| exposure time | D_{long}, Dₛₕₒᵣₜ |
| image processing module | 10 |
| background processing module | 104 |
| foreground processing module | 105 |
| image-stitching module | 106 |
| foreground image | 11, 11B |
| background image | 12 |
| near-field motion blur | 12_{blur} |
| segmented flash | F |
| emitter | F_{E} |
| de-blurred image | 4 |
| segmented image | 5 |
| composite image | 6 |
| camera phone | 2 |
| scene | 3 |
| far-field object | 31 |
| near-field object | 32 |
| method steps | 41, ..., 47 |
| prior art image | 7 |
| background | 71 |
| near-field motion blur | 74 |

## Claims

1. A method of operating a camera arrangement (1) of a mobile device (2), which method comprises the steps of
- operating a first camera (C1) of the camera arrangement (1) using a short exposure duration (Dₛₕₒᵣₜ) and simultaneously actuating a flash unit (12) of the camera arrangement (1) to obtain a first image (11);
- operating a second camera (C2) of the camera arrangement (1) using a long exposure duration (D_{long}) to obtain a second image (12);
- processing the first image (11) to extract foreground image data (5);
- processing the second image (12) to obtain background image data (4); and
- overlaying the foreground image data (4) onto the background image data (5) to obtain a final image (6).

2. A method according to the preceding claim, comprising a step of removing image blur (12_{blur}) from the second image (12).

3. A method according to any of the preceding claims, wherein the step of extracting foreground image data (5) from the first image (11) comprises a step of identifying an illuminated near-field object (32).

4. A method according to the preceding claim, wherein an illuminated near-field object (32) is identified using an image segmentation algorithm.

5. A method according to any of the preceding claims, comprising an initial step of determining the light level in the scene (3), and wherein the long exposure time (D_{long}) for the second camera (C2) is determined on the basis of the determined light level.

6. A method according to any of the preceding claims, wherein the step of actuating a flash unit of the camera arrangement (1) comprises selectively activating one or more emitters (121) of a segmented flash (12).

7. A method according to any of the preceding claims, comprising an initial step of obtaining a depth map of the scene (3).

8. A method according to claim 6 or claim 7, wherein the emitters (121) of the flash unit (12) are actuated on the basis of the depth map and/or on the basis of the first image (11) .

9. A method according to any of the preceding claims, comprising additional steps of
- operating the second camera (C2) using a short exposure time (Dₛₕₒᵣₜ) while actuating the flash unit (12) to obtain a third image (11B); and
- extracting further near-field image data from the third image (11B) for use in the final image (6).

10. A camera control arrangement (1) configured to perform the method according to any of claims 1 to 9, comprising
- a means for actuating the first camera (C1) of the camera arrangement (1) using a short exposure time (Dₛₕₒᵣₜ) and simultaneously actuating the flash unit (12) of the camera arrangement (1) to obtain a first image (11);
- a means for actuating the second camera (C2) of the camera arrangement (1) using a long exposure time (D_{long}) to obtain a second image (12);
- a foreground image processing module (105) configured to extract foreground image data (5) from the first image (11);
- a background image processing module (104) configured to extract background image data (4) from the second image (12);
- a composition module (6) configured to compose a final image (6) from the foreground image data (5) and the background image data (4).

11. A camera control arrangement according to the preceding claim, configured to determine the light level in the scene (3) and to compute an exposure time (D_{long}, Dₛₕₒᵣₜ) on the basis of the determined light level.

12. A camera control arrangement according to claim 10 or claim 11, configured to determine a depth map of the scene (3) and to compute an exposure time (D_{long}, Dₛₕₒᵣₜ) on the basis of the depth map.

13. A camera arrangement (1) of a handheld mobile device (2), comprising
- a first camera (C1) including an image sensor (S1) and focussing optics (L1);
- a second camera (C2) including an image sensor (S2) and focussing optics (L2), wherein the field of view (FOV2) of the second camera (C2) is larger than the field of view (FOV1) of the first camera (C1);
- a segmented flash (12); and
- a camera control arrangement (1) according to any of claims 10 to 12.

14. A camera arrangement according to the preceding claim, wherein the first camera (C1) comprises a zoom lens (C1) , and wherein the second camera (C2) comprises a wide angle lens (L2).

15. A camera arrangement according to claim 13 or claim 14, wherein the resolution of the first camera (C1) exceeds the resolution of the second camera (C2).

## Amended claims

### Amended claims in accordance with Rule 137(2) EPC.

1. A method of operating a camera arrangement (1) of a mobile device (2), which method comprises the steps of
- operating a first camera (C1) of the camera arrangement (1) using a short exposure duration (Dₛₕₒᵣₜ) and simultaneously actuating a flash unit (F) of the camera arrangement (1) to obtain a first image (11) of a low-light scene (3) comprising near-field and far-field elements;
- operating a second camera (C2) of the camera arrangement (1) using a long exposure duration (D_{long}) to obtain a second image (12) during which the flash unit (F) remains off, and wherein the long exposure duration (D_{long}) is chosen to collect sufficient ambient light;
- processing the first image (11) to extract foreground image data (5);
- processing the second image (12) to obtain background image data (4); and
- overlaying the foreground image data (4) onto the background image data (5) to obtain a final image (6).

2. A method according to the preceding claim, comprising a step of removing image blur (12_{blur}) from the second image (12).

3. A method according to any of the preceding claims, wherein the step of extracting foreground image data (5) from the first image (11) comprises a step of identifying an illuminated near-field object (32).

4. A method according to the preceding claim, wherein an illuminated near-field object (32) is identified using an image segmentation algorithm.

5. A method according to any of the preceding claims, comprising an initial step of determining the light level in the scene (3), and wherein the long exposure time (D_{long}) for the second camera (C2) is determined on the basis of the determined light level.

6. A method according to any of the preceding claims, wherein the step of actuating a flash unit of the camera arrangement (1) comprises selectively activating one or more emitters (F_{E}) of a segmented flash (F).

7. A method according to any of the preceding claims, comprising an initial step of obtaining a depth map of the scene (3).

8. A method according to claim 6 or claim 7, wherein the emitters (F_{E}) of the flash unit (F) are actuated on the basis of the depth map and/or on the basis of the first image (11).

9. A method according to any of the preceding claims, comprising additional steps of
- operating the second camera (C2) using a short exposure time (Dₛₕₒᵣₜ) while actuating the flash unit (F) to obtain a third image (11B); and
- extracting further near-field image data from the third image (11B) for use in the final image (6).

10. A camera control arrangement (1) configured to perform the method according to any of claims 1 to 9, comprising
- a means for actuating the first camera (C1) of the camera arrangement (1) using a short exposure time (Dₛₕₒᵣₜ) and simultaneously actuating the flash unit (F) of the camera arrangement (1) to obtain a first image (11);
- a means for actuating the second camera (C2) of the camera arrangement (1) using a long exposure time (D_{long}) to obtain a second image (12);
- a foreground image processing module (105) configured to extract foreground image data (5) from the first image (11);
- a background image processing module (104) configured to extract background image data (4) from the second image (12);
- a composition module (6) configured to compose a final image (6) from the foreground image data (5) and the background image data (4).

11. A camera control arrangement according to the preceding claim, configured to determine the light level in the scene (3) and to compute an exposure time (D_{long}, Dₛₕₒᵣₜ) on the basis of the determined light level.

12. A camera control arrangement according to claim 10 or claim 11, configured to determine a depth map of the scene (3) and to compute an exposure time (D_{long}, Dₛₕₒᵣₜ) on the basis of the depth map.

13. A camera arrangement (1) of a handheld mobile device (2), comprising
- a first camera (C1) including an image sensor (S1) and focussing optics (L1);
- a second camera (C2) including an image sensor (S2) and focussing optics (L2), wherein the field of view (FOV2) of the second camera (C2) is larger than the field of view (FOV1) of the first camera (C1);
- a segmented flash (F); and
- a camera control arrangement (1) according to any of claims 10 to 12.

14. A camera arrangement according to the preceding claim, wherein the first camera (C1) comprises a zoom lens (C1) , and wherein the second camera (C2) comprises a wide angle lens (L2).

15. A camera arrangement according to claim 13 or claim 14, wherein the resolution of the first camera (C1) exceeds the resolution of the second camera (C2).
